# EUROPEAN PATENT SPECIFICATION

(11) **EP 0 333 824 B1**
(45) Date of publication and mention of the grant of the patent: **04.10.1995**
(21) Application number: 88908728.4
(22) Date of filing: 11.10.1988
(51) Int. Cl.: B32B 27/20, B32B 27/32

(54) **POLYMERIC FILMS**
POLYMERFILME
FILMS POLYMERES

(30) Priority: 12.10.1987 GB 8723900
(43) Date of publication of application: 27.09.1989
(73) Proprietor: COURTAULDS FILMS (HOLDINGS) LIMITED, Bridgwater Somerset TA6 4PA (GB)
(72) Inventor: KENDALL, Kenneth, Douglas, Bridgwater Somerset (GB); SULLIVAN, Janette, Mary, Derby (GB); BICZENCZUK, Susan, Bridgwater Somerset (GB)
(74) Representative: Claisse, John Anthony, Dr.
(86) International application number: GB8800830
(87) International publication number: WO8903309

(56) References cited:
- FR-A- 2 093 986
- GB-A- 1 341 630
- US-A- 3 887 745

## Description

This invention concerns polymeric films having a surface that can be written on.

It has been proposed hitherto to prepare synthetic paper from polyolefins, in particular polypropylene, for example by including a filler in the polymer which is oriented to produce voids in the body of the films and surface roughness which provides a writeable surface. While such materials can be used as synthetic paper, they cannot be used as the basis for mending tape since mending tape has not only to be capable of being written on, it should enable indicia covered by the tape to be read through the tape and furthermore to be photocopied through the tape.

In order to provide a mending tape which facilitates such photocopying, it has been proposed to combine a clear base sheet of polypropylene with a roughened surface layer composed of a polypropylene resin containing inorganic filler particles to provide a film having a total light transmittance of at least 90 percent when supplied with an adhesive layer.

Various proposals have also been made for synthetic papers made of polymeric materials rather than cellulose fibres. British Patent Specification 1341630, for example, is concerned with synthetic papers consisting of oriented webs of incompatible polymers containing chalk to obtain a writeable surface on an opaque film. The desired surface properties for writeability result from the presence of a fibrilated structure which is a consequence of the chalk which also imparts opacity and therefore paper-like properties to the film. The absence of chalk from such films results in high transparency which is obviously rejected for use as a synthetic paper.

French Patent Specification 2093986 is also concerned with the production of synthetic papers, and again opacity is provided by the presence of a voiding agent, ie, they contain microcavities. Such synthetic papers would not be of any value in the manufacture of mending tapes where good transparency is required.

According to the present invention there is provided an oriented polymeric film having good light transmission and being suitable for use as a base tape in the manufacture of invisible mending tape, the film comprising a base layer of substantially transparent polypropylene having a substantially transparent writeable layer thereon, the writeable layer comprising a blend of a first polymer having a melt flow index of not more than 1g/10 mins under ASTM D1238/73 (condition L) and at least one polymer incompatible therewith.

The films of the present invention have a writeable surface provided by a blend of incompatible polymers. This can be achieved without the use of a filler in the writeable layer.

The blends should contain a polymer with a melt flow index of not more than 1g/10 mins under ASTM D1238/73 (condition L), and preferably this polymer should not flow under these conditions. Polyethylene can be used for the purpose, for example polyethylene having a density of from 0.920 g/cm³ to 0.970g/cm³, and preferably about 0.936g/cm³.

Incompatibility can be provided in the blends by the use of a polymer containing units derived from at least one of ethylene, propylene and but-1-ene provided that the polymer is incompatible, i.e. it should not be polyethylene or a polymer which includes sufficient ethylene based units to impart compatibility. Examples of suitable polymers which are incompatible with polyethylene include polypropylene, co-polymers of propylene or but-1-ene with ethylene, and terpolymers of propylene with ethylene and but-1-ene.

It is preferred that the melt flow index of the incompatible polymer in the blend is from 4 to 50g/10 mins under ASTM D1238/73 (condition L), especially from 6 to 15, advantageously about 8g/10 mins. The density of the incompatible polymer is preferably not less than 0.900g/cm³.

The blend used to form the writeable layer will usually contain from 25 to 75 weight percent of the first polymer having a melt flow index of not more than 1g/10mins. under the specified conditions.

Although the present invention provides films having a writeable surface without the use of a filler in the writeable layer, in particular writeability with ball-point pen or felt-tip pen, pencil writeability can be improved by the inclusion of a small amount of filler particles. Good pencil writeability can be obtained by the inclusion of up to 5 weight percent of filler particles, based on the weight of the writeable layer. An example of inorganic filler particles which can be used is finely divided silica. In order to enhance writeability, the particle size of the filler particles is preferably greater than the thickness of the writeable layer.

The thickness of the base layer can be selected as desired for a particular end use of the film. Examples of suitable thicknesses are from 15 to 55 µm, e.g. about 37 µm thick. The writeable layer is preferably from 0.5 to 10 µm thick, more particularly from 1 to 5 µm thick, and advantageously from 2 to 4 µm thick. When filler particles are included in the writeable layer, they are preferably up to 10 µm in diameter.

Writeability with ball-point pen can be improved by a surface treatment, for example corona discharge.

Films of the present invention are of particular value as a tape base in the manufacture of invisible mending tape. However, they can also be used as a packaging film. For either end use, the films can include a third polymer layer on the base layer. This further layer can be selected for example to promote acceptance of an adhesive layer or to impart printability and/or heat sealability to the surface of the film opposite the writeable layer. Examples of suitable third layers include polymers containing units derived from at least two of ethylene, propylene, but-1-ene, an acrylic ester, acrylic acid and maleic anhydride. Typically the third layer will be from 0.6 to 2 µm thick. The third layer can be corona discharge treated to aid adhesion of a subsequently applied adhesive layer. However, if a third layer is not used, it will generally be necessary to provide a primer layer if an adhesive layer is to be used.

Films of the present invention can be produced in known manner by orienting a film consisting of a polypropylene base layer and a layer of the blend thereon. Advantageously this is effected by co-extruding these layers to form a composite film which is thereafter stretched in the machine direction, for example from 4.5 to 7:1, advantageously about 6.5:1, and thence in the transverse direction, for example from 9 to 10:1.

When a third polymeric layer is used, it can be formed by coextrusion of a three layer composite film which is thereafter biaxially oriented, for example under the above stretching conditions.

Although of particular value as tape base for mending tape, films of the present invention can, when provided with a third polymeric layer, be subjected to further treatment steps, for example they can be metallised in known manner, or they can be provided with printed indicia. Films which have been treated in such a manner can be used as packaging materials.

The following Examples are given by way of illustration only. All parts are by weight unless stated otherwise, and all melt flow index values are measured under ASTM 1238/73 (condition L).

### Example 1

A three-layer film web was produced by coextruding a base layer of polypropylene homopolymer with a dispersion on one face of 50% of polyethylene having a melt flow index of 0.12g/10 mins and 50% of a copolymer of ethylene and propylene having a melt flow index of 8g/10 mins, containing about 4% of units derived from ethylene, and on the other face a layer of the above ethylene/propylene copolymer. The web was cooled on a chill roll and thereafter stretched 6.5:1 in the machine direction and subsequently 9.5:1 in the transverse direction.

The resultant film had a total thickness of 40 µm, with the layer of blend being about 2 microns thick and the layer on the opposite face being about 1 µm thick.

It had a surface that showed good writeability with a ball-point pen. Furthermore, the film showed good light transmission properties so that when placed over writing or typing on paper they could be read clearly through the film.

### Example 2

Example 1 was repeated but with the writeable layer being formed from a dispersion of 50% of the polyethylene of Example 1 and 50% of a copolymer of ethylene and but-1-ene containing 1.5% of ethylene, and having a melt flow index of 10g/10 min. The layer on the opposite face of the homopolymer layer was of the copolymer specified in Example 1.

The resultant film having a writeable layer 2 µm thick and a copolymer layer 1 µm thick had similar properties to those of the film produced in Example 1.

### Example 3

Example 2 was repeated but using a copolymer of ethylene and but-1-ene containing 5% of ethylene and having a melt flow index of 40g/10 min. in place of the copolymer containing 1.5% of ethylene. The polymer layer on the opposite face was the copolymer as in Example 1.

The resultant film after stretching the coextruded three-layer web had a writeable layer 4 µm thick and a copolymer layer on the opposite face 1 µm thick.

The writeable surface of the film had a slightly rougher feel than that of the film produced in Example 2. However its writeability with ball-point pen and its light transmission were substantially identical.

## Claims

1. An oriented polymeric film having a good light transmission and being suitable for use as a base tape in the manufacture of invisible mending tape, the film comprising a base layer of substantially transparent polypropylene having a substantially transparent writeable layer thereon, the writeable layer comprising a blend of a first polymer having a melt flow index of not more than 1g/10 mins under ASTM D1238/73 (condition L) and at least one polymer incompatible therewith.

2. A film according to claim 1, wherein the first polymer is a polyethylene.

3. A film according to claim 2, wherein the polyethylene has a density of from 0.920g/cm³ to 0.970g/cm³.

4. A film according to any of the preceding claims, wherein the blend includes an incompatible polymer having a melt flow index of from 4 to 50g/10 mins under ASTM D1238/73 (condition L).

5. A film according to claim 4, wherein the incompatible polymer has a melt flow index of about 8g/10 mins under ASTM D1238/73 (condition L).

6. A film according to claim 4 or claim 5, wherein the incompatible polymer contains units derived from at least one of ethylene, propene and but-1-ene, and is other than an ethylene homopolymer.

7. A film according to any of the preceding claims, wherein the blend comprises from 25 to 75 weight percent of the first polymer based on the total weight of the blend.

8. A film according to any of the preceding claims, wherein the writeable layer includes up to 5 weight per cent of organic or inorganic filler particles dispersed therein based on the weight of the layer.

9. A film according to any of the preceding claims, having a third polymeric layer on the base layer.

10. A film according to any of the preceding claims, having an adhesive layer on the base layer or on the third polymeric layer when present.

11. A film according to claim 10, in the form of a mending tape.

12. A film according to any of claims 1 to 9, in the form of a packaging film.

## Patentansprüche

1. Orientierter Polymerfilm, der eine gute Lichtdurchlässigkeit aufweist und für die Verwendung als Grundband bei der Herstellung von unsichtbaren Reparaturbändern geeignet ist, wobei der Film eine Grundschicht aus im wesentlichen tranparentem Polypropylen und eine darauf angeordnete, im wesentlichen transparente beschreibbaren Schicht umfaßt, und wobei die beschreibbare Schicht aus Mischung von einem ersten Polymer, das einen Schmelzindex von nicht mehr als 1g/10 min unter ASTM D 1238/73 (Bedingung L) aufweist und mindestens von noch einem damit inkompatiblen Polymer umfaßt.

2. Film nach Anspruch 1, **dadurch gekennzeichnet**, daß die Mischung als erstes Polymer ein Polyethylen enthält.

3. Film nach Anspruch 2, **dadurch gekennzeichnet**, daß das Polyethylen eine Dichte von 0,920 g/cm³ bis 0,970 g/cm³ aufweist.

4. Film nach einem der vorhergehenden Ansprüche, **dadurch gekennzeichnet**, daß die Mischung ein inkompatibles Polymer mit einem Schmelzindex von 4g/10 min bis 50g/10 min unter ASTM D 1238/73 (Bedingung L) enthält.

5. Film nach einem der Ansprüche 1 bis 4, **dadurch gekennzeichnet**, daß das inkompatible Polymer einen Schmelzindex von etwa 8g/10 min unter ASTM D 1238/73 (Bedingung L) aufweist.

6. Film nach einem der Ansprüche 4 oder 5, **dadurch gekennzeichnet**, daß das inkompatible Polymer Einheiten enthält, die sich mindestens von einem Ethylen, Propen und But-1-en herleiten, und verschieden von einem Ethylen-Homopolymer ist.

7. Film nach einem der vorhergehenden Ansprüche, **dadurch gekennzeichnet**, daß die Mischung von 25 bis 75 Gew.% - auf das Gesamtgewicht der Mischung bezogen - des ersten Polymers enthält.

8. Film nach einem der vorhergehenden Ansprüche, **dadurch gekennzeichnet**, daß die beschreibbare Schicht bis zu 5 Gew.% - auf das Gewicht der Schicht bezogen - organische oder anorganische, dispergierte Füllstoffteilchen enthält.

9. Film nach einem der vorhergehenden Ansprüche 1 bis 8, **dadurch gekennzeichnet**, daß er auf der Grundschicht eine dritte Polymerschicht aufweist.

10. Film nach einem der vorhergehenden Ansprüche, **dadurch gekennzeichnet**, daß er auf der Grundschicht oder - wenn vorhanden - auf der dritten Polymerschicht eine klebende Schicht aufweist.

11. Film nach Anspruch 10, **dadurch gekennzeichnet**, daß er in der Form eines Reparaturbandes vorliegt.

12. Film nach einem der Ansprüche 1 bis 9, **dadurch gekennzeichnet**, daß er in der Form eines Verpackungsfilms vorliegt.

## Revendications

1. Film polymère orienté, ayant un bon pouvoir de transmission de la lumière et pouvant être utilisée comme bande de base dans la fabrication d'une bande de réparation invisible, le film comprenant une couche de base en un polypropylène essentiellement transparent, sur laquelle est disposée une couche apte à recevoir des inscriptions et essentiellement transparente, la couche apte à recevoir des inscriptions comprenant un mélange d'un premier polymère ayant un indice de fusion non supérieur à 1 g/10 min. selon ASTM D1238/73 (condition L) et d'au moins un polymère incompatible avec celui-ci.

2. Film selon la revendication 1, dans lequel le premier polymère est un polyéthylène.

3. Film selon la revendication 2, dans lequel le polyéthylène a une masse volumique de 0,920 à 0,970 g/cm³.

4. Film selon l'une quelconque des revendications précédentes, dans lequel le mélange comprend un polymère incompatible ayant un indice de fusion de 4 à 50 g/10 min. selon ASTM D1238/73 (condition L).

5. Film selon la revendication 4, dans lequel le polymère incompatible a un indice de fusion d'environ 8 g/10 min. selon ASTM D1238/73 (condition L).

6. Film selon la revendication 4 ou 5, dans lequel le polymère incompatible contient des motifs issus d'au moins l'un des composés éthylène, propène et butène-1, et est différent d'un homopolymère de l'éthylène.

7. Film selon l'une quelconque des revendications précédentes, dans lequel le mélange comprend de 25 à 75 % en poids du premier polymère, par rapport au poids total du mélange.

8. Film selon l'une quelconque des revendications précédentes, dans lequel la couche apte à recevoir des inscriptions contient en dispersion jusqu'à 5 % en poids de particules de charge organique ou minérale, par rapport au poids de la couche.

9. Film selon l'une quelconque des revendications précédentes, qui possède sur la couche de base une troisième couche polymère.

10. Film selon l'une quelconque des revendications précédentes, qui possède une couche adhésive sur la couche de base ou, si elle est présente, sur la troisième couche polymère.

11. Film selon la revendication 10, sous forme d'une bande de réparation.

12. Film selon l'une quelconque des revendications 1 à 9, sous forme d'un film d'emballage.
